# EUROPEAN PATENT APPLICATION

(11) **EP 1 180 698 A1**
(43) Date of publication of application: **20.02.2002**
(21) Application number: 00402243.0
(22) Date of filing: 08.08.2000
(51) Int. Cl.: G02B 3/00, G02B 3/08, G02B 27/22, B29D 11/00

(54) **Lens sheet for a display device**

(71) Applicant: THOMSON multimedia, 92100 Boulogne Billancourt (FR)
(72) Inventor: Chikazawa, Yoshiharu, 92100 Boulogne-Billancourt (FR)
(74) Representative: Ruellan-Lemonnier, Brigitte

(57) **Abstract**

The invention relates to a lens sheet (10) for a display device, such as a LCD projector or a 3D display.

This lens sheet is made by thermoforming. It comprises a flat face which is assembled with a flat, transparent and rigid substrate (24) with a glue (22) having the same refractive index as, or a refractive index close to, the refractive index of the material of the lens sheet.

## Description

The invention relates to a lens sheet manufactured by thermoforming.

This kind of lens sheet comprises generally, on one side of a sheet, a plurality of lenses having, each, small dimensions at least in one direction, for instance of the order of one millimeter and is currently used for different purposes. For instance in a liquid crystal display projector, the lens sheet comprises an array of small lenses which provide an uniform light intensity on a liquid crystal image forming device. This lens sheet can be used either for direct projection or for rear projection.

These lens sheets are also used for stereoscopic or three dimensional (3D) displays in order to separate the rays for the right and the left eye.

A Fresnel lens is also a lens sheet.

Such lens sheets are manufactured by thermoforming using resin. They may be also manufactured with glass.

The invention results from the observation that thermoformed lens sheets do not provide the best optical quality, more particularly because the projected image or the stereoscopic or 3D image present non uniform lit zones. It has been discovered that the origin of such optical defects are microscopic non uniformities on the flat side of the lens sheets.

Therefore the lens sheet according to the invention comprises a rigid, transparent and flat substrate, for instance made of glass, and which is assembled by glue to the flat face of the lens sheet, the refractive index of the glue being the same as, or close to, the refractive index of the material forming the sheet.

By the provision of the transparent, rigid and flat substrate with a glue having a refractive index which is the same, or practically the same, as the refractive index of the thermoformed lens sheet, the microscopic defects of the flat face of the lens sheet are filled with glue which, therefore, eliminates the optical defects.

Moreover, with the rigid substrate, the lens is more rigid and, therefore, is less subject to bending due to, for instance, the heat generated by an illumination lamp.

In an embodiment, two lens sheets are glued on each face of the rigid, flat and transparent substrate. With this double-sided lens sheet technology, it is possible to realize a biconvex, or biconcave lens sheet, or a concave lens on one side and a convex lens on the other side. Moreover, the design may be easily modified. The materials used for each side may be different.

The invention is not limited to the manufacture of lens sheets for projectors or displays. It may also be used for Fresnel lenses.

In an embodiment, the flat substrate is made of hard resin.

Other features and advantages of the invention will appear with the description of certain of its embodiments, this description being made with reference to the herein appended drawings, wherein :
Figure 1 is a view in section of a lens sheet after thermoforming,
Figure 2 is a view similar to figure 1 for a lens sheet according to the invention,
Figure 3 is an isomeric view of a lens sheet according to the invention, and
Figure 4 is a view similar to figure 2 for an other embodiment.

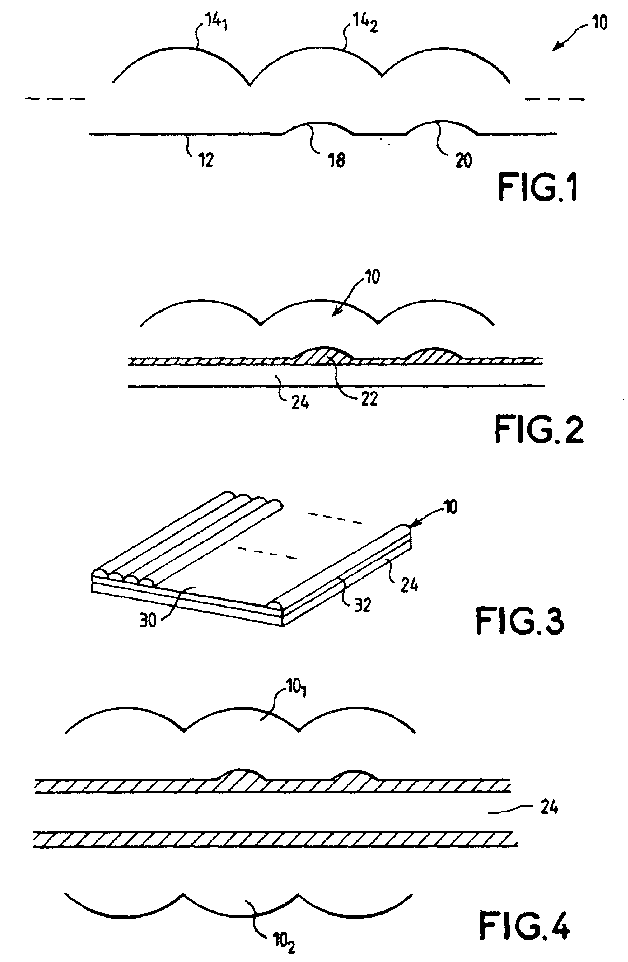

As shown on figure 1, a lens sheet used for 3D projection comprises a series of cylindrical lenses 14₁, 14₂, etc. formed on one side of a sheet 10 having, on the other side, a plane surface 12.

This sheet is manufactured by thermoforming, starting from a flat resin block which is heated at a temperature wherein the flat block is softened and installed between two dies (not shown) wherein the first is flat in order to form the flat side 12 and the second die has a shape corresponding to lenses 14₁, 14₂, etc..

As shown, the thermoforming creates stresses which generate microdefects 18 and 20 which are recesses of the flat face 12. These microdefects generate optical non uniformities such as Newton rings when the lens is used.

In order to eliminate the optical defects, according to the invention, the recesses 18 and 20 are filled with glue 22 such as a balsam glue having a refractive index which is equal to, or close to, the refractive index of the resin forming the sheet 10. This glue 22 (figure 2) is used to assemble the side 12 of lens sheet 10 with a flat, transparent and rigid subtrate 24 which, in the example, is made of glass.

With this embodiment, the hollow defects 18 and 20 are filled with glue having the same refractive index as the resin forming the lens 10 and therefore the generation of Newton rings is prevented.

Moreover, the subtrate 24 increases the rigidity of the lens assembly 10. Consequently this lens assembly 10 is less sensitive to heat, i.e. it is less subject to bending when it is lit by a back source.

It is also possible to further prevent such bending by providing rigid rods 30, 32 at the periphery of the lens assembly 10. In fact, these rigid rods have the same function as a frame.

In the embodiment represented on figure 4 two lens assemblies 10₁, 10₂, are glued to the same glass substrate 24', one lens assembly 10₁ being on one side of the substrate 24' and the other lens assembly 10₂ being glued to the other side of glass substrate 24'.

## Claims

1. Lens sheet for a display device, such as a LCD projector or a 3D display, this lens sheet, which is made by thermoforming, presenting a flat face, wherein said flat face is assembled with a flat, transparent and rigid substrate with a glue having the same refractive index as, or a refractive index close to, the refractive index of the material of the lens sheet.

2. Lens sheet according to claim 1 wherein the glue comprises balsam.

3. Lens sheet according to claim 1 or 2 wherein the flat, transparent and rigid substrate is made of glass or resin.

4. Lens sheet according to any of the previous claims comprising rigid rods to prevent the bending of the sheet at its periphery.

5. Lens sheet according to any of the previous claims wherein said sheet has two parts, each of which being glued to the opposite flat faces of the transparent rigid substrate.

6. A stereoscopic or 3D display comprising a lens sheet according to any of the previous claims.

7. A LCD projector comprising a lens sheet according to any of claims 1 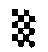 5.

8. A Fresnel lens comprising a lens sheet according to any of claims 1 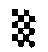 5.
